# EUROPÄISCHE PATENTSCHRIFT

(11) **EP 2 728 562 B1**
(45) Veröffentlichungstag und Bekanntmachung des Hinweises auf die Patenterteilung: **16.08.2017**
(21) Anmeldenummer: 13187467.9
(22) Anmeldetag: 07.10.2013
(51) Int. Cl.: G08G 1/01, B60W 30/14, B60W 40/105

(54) **Datenverarbeitungseinrichtung und Verfahren für eine solche Datenverarbeitungseinrichtung**
Data processing device and method for such a data processing device
Dispositif de traitement de données et procédé pour un tel dispositif de traitement de données

(30) Priorität: 30.10.2012 DE 102012219850
(43) Veröffentlichungstag der Anmeldung: 07.05.2014
(73) Patentinhaber: ROBERT BOSCH GMBH, 70442 Stuttgart (DE)
(72) Erfinder: Balkema, Jan Wietse, 31139 Hildesheim (DE); Poechmueller, Werner, 31139 Hildesheim (DE)

(56) Entgegenhaltungen:
- DE-A1-102010 003 331
- US-A1- 2011 301 802
- KAMAL M A S ET AL: "Comprehensive driving behavior model for intelligent transportation systems", COMPUTER AND COMMUNICATION ENGINEERING, 2008. ICCCE 2008. INTERNATIONAL CONFERENCE ON, IEEE, PISCATAWAY, NJ, USA, 13. Mai 2008 (2008-05-13), Seiten 1233-1236, XP031292984, ISBN: 978-1-4244-1691-2
- MESSELODI S ET AL: "Intelligent extended floating car data collection", EXPERT SYSTEMS WITH APPLICATIONS, OXFORD, GB, Bd. 36, Nr. 3, 1. April 2009 (2009-04-01), Seiten 4213-4227, XP025881154, ISSN: 0957-4174, DOI: 10.1016/J.ESWA.2008.04.008 [gefunden am 2008-04-25]

## Beschreibung

Die Erfindung betrifft ein Verfahren und eine Datenverarbeitungseinrichtung mit einer Empfangseinrichtung und einer Ermittlungseinrichtung, wobei die Empfangseinrichtung mit der Ermittlungseinrichtung gekoppelt ist, wobei die Empfangseinrichtung ausgelegt ist, eine Information über eine Position wenigstens eines Fahrzeugs und eine zu der erfassten Position zugeordnete Information über einen vor dem Fahrzeug vorausliegenden Streckenabschnitt bezüglich einer freien Fahrt des Fahrzeugs zu empfangen, wobei die Ermittlungseinrichtung ausgelegt ist, eine, der erfassten Position zugeordnete, zu ermittelnde Optimalgeschwindigkeit, anhand einer zu der erfassten Position zugeordneten erfassten Fahrgeschwindigkeit des Fahrzeugs zu bestimmen.

### Stand der Technik

Aus der DE 10 2010 046 236 A1 ist ein Verfahren und ein Assistenzsystem für ein Fahrzeug bekannt, wobei zur Regelung der Längsbewegung des Fahrzeugs in Abhängigkeit einer Mehrzahl an vorausfahrenden Fahrzeugen die Fahrzeugdaten empfangen werden, die durch vorausfahrende Fahrzeuge gesendet werden und jeweils zumindest die momentane Position des jeweiligen vorausfahrenden Fahrzeugs enthalten. Ferner werden die momentanen Abstände zwischen dem Fahrzeug und dem vorausfahrenden Fahrzeug mittels der von den vorausfahrenden Fahrzeugen gesendeten Positionen berechnet. Ferner wird eine durch den Fahrer eingestellte momentane Beschleunigung des Fahrzeugs erfasst. Des weiteren wird automatisch die Beschleunigung des Fahrzeugs auf den momentanen Sollwert eingestellt, wenn dieser kleiner als die momentane Beschleunigung ist.

Ferner ist aus der WO 2005/064568 A1 bekannt, dass die Fahrzeugsensorik verwendet werden kann, um eine Klassifikation der Fahrsituation vorzunehmen.

Aus Kamal M A S et al: "Comprehensive driving behavior model for intelligent transportation systems", Computer and Communication Engineering, 2008, ICCCE 2008 ist ein Fahrzeugsverfolgungskonzept in einem realen Fahrszenario gezeigt. Dabei ist eine Datenverarbeitungseinrichtung mit einer Empfangseinrichtung und einer Ermittlungseinrichtung vorgesehen, wobei die Empfangseinrichtung mit der Ermittlungseinrichtung gekoppelt ist. Dabei erfasst die Empfangseinrichtung eine Information über wenigstens ein Fahrzeug. Die Ermittlungseinrichtung ist dabei ausgelegt, eine der erfassten Position zugeordnete zu ermittelnde Optimalgeschwindigkeit anhand einer zu der erfassten Position zugeordneten erfassten Fahrgeschwindigkeit des Fahrzeugs zu bestimmen. Ferner wird zur Bestimmung der Optimalgeschwindigkeit zu der erfassten Position ausschließlich diejenige Fahrgeschwindigkeit des Fahrzeugs berücksichtigt, die mit der Information einer freien Fahrt über den vorausliegenden Streckenabschnitt verknüpft ist.

Ferner sind Systeme bekannt, die auf Basis aktueller Fahrzeugposition und Geschwindigkeit mittels Algorithmen Informationen über einen Stau und/oder eine orts- und zeitabhängige Durchschnittsgeschwindigkeit auf einem Straßensegment ermitteln.

Zur teilautohomen oder autonomen Fahrzeuglängsführung ist es notwendig, eine sichere und komfortable Fahrzeuggeschwindigkeit für einen bestimmten Streckenabschnitt zur Steuerung des Fahrzeugs zu kennen.

Es ist Aufgabe der Erfindung, eine komfortable Fahrzeuggeschwindigkeit für einen Streckenabschnitt zu ermitteln.

Die Erfindung wird mittels der Merkmale einer Datenverarbeitungseinrichtung gemäß Anspruch 1, mittels eines Verfahrens nach Anspruch 9 und mittels eines Computerprogrammprodukts nach Anspruch 10 gelöst. Vorteilhafte Ausführungsformen sind in den abhängigen Ansprüchen angegeben.

Erfindungsgemäß wurde erkannt, dass eine Optimalgeschwindigkeit für einen Streckenabschnitt mittels einer Datenverarbeitungseinrichtung ermittelt werden kann, die eine Empfangseinrichtung und eine Ermittlungseinrichtung umfasst, wobei die Empfangseinrichtung mit der Ermittlungseinrichtung gekoppelt ist. Die Empfangseinrichtung ist ausgelegt, eine Information über eine Position wenigstens eines Fahrzeugs und eine zu der erfassten Position zugeordnete Information über einen vor dem Fahrzeug liegenden Streckenabschnitt bezüglich eines in dem Streckenabschnitt vorausfahrenden Fahrzeugs zu empfangen. Die Ermittlungseinrichtung ist ausgelegt, eine der erfassten Position zugeordnete Optimalgeschwindigkeit anhand einer zu der erfassten Position zugeordneten erfassten Fahrgeschwindigkeit des Fahrzeugs zu bestimmen. Des Weiteren wird zur Ermittlung der Optimalgeschwindigkeit zu der erfassten Position von der Ermittlungseinrichtung ausschließlich diejenige Fahrgeschwindigkeit des Fahrzeugs berücksichtigt, die mit der Information einer freien Fahrt für den vorausliegenden Streckenabschnitt verknüpft ist.

Auf diese Weise kann eine Optimalgeschwindigkeit für einen Streckenabschnitt ermittelt werden, die zum einen durch die Fahrzeuginsassen als angenehm und nicht zu schnell empfunden wird und zum anderen nicht einer möglichen Maximalgeschwindigkeit entspricht, sodass bei einer Fahrzeuglängsführung mit Optimalgeschwindigkeit ausreichend Sicherheitsreserven, beispielsweise für geänderte Wetterbedingungen oder für Ausweichmanöver, gegeben sind. Ferner wird vermieden, dass die Optimalgeschwindigkeit durch langsam fahrenden Verkehr, insbesondere durch Staubildung, verfälscht wird. Erfindungsgemäß umfasst die Datenverarbeitungseinrichtung eine Erfassungseinrichtung und eine mit der Erfassungseinrichtung verbundene Sendeeinrichtung. Die Erfassungseinrichtung ist ausgelegt, eine Position des Fahrzeugs zu erfassen. Ferner überwacht die Erfassungseinrichtung den vorausliegenden Streckenabschnitt bezüglich der freien Fahrt des Fahrzeugs und stellt der Sendeeinrichtung die Information über den Streckenabschnitt bereit, wobei die Sendeeinrichtung ausgelegt ist, die von der Erfassungseinrichtung bereitgestellte Information über den Streckenabschnitt und/oder die Information über die Position des Fahrzeugs an die Empfangseinrichtung zu senden. Besonders aussagekräftig kann die Optimalgeschwindigkeit durch die Ermittlungseinrichtung dann ermittelt werden, wenn die Erfassungseinrichtung ein Positionsbestimmungssystem, insbesondere ein GPS-System und wenigstens eines der folgenden Systeme umfasst: ein Radarsystem, ein Kamerasystem, ein Lidarsystem, ein Laserabstandsmesssystem.

In einer weiteren Ausführungsform der Erfindung umfasst die Datenverarbeitungseinrichtung einen Speicher, der mit der Ermittlungseinrichtung verbunden ist, wobei in dem Speicher zu einer erfassten Position eine bereits ermittelte Optimalgeschwindigkeit abgelegt ist. Auf diese Weise kann teilautonome bzw. autonome Fahrzeuglängsführung auch an Positionen erfolgen, die durch das Fahrzeug erstmalig abgefahren werden.

Die ermittelte Optimalgeschwindigkeit kann weiter präzisiert werden, wenn die Ermittlungseinrichtung eine neu ermittelte Optimalgeschwindigkeit auf Grundlage der im Speicher abgelegten ermittelten Optimalgeschwindigkeit und der ermittelten Fahrgeschwindigkeit ermittelt.

Besonders vorteilhaft hierzu ist, wenn die Ermittlungseinrichtung zur Ermittlung der neu ermittelten Optimalgeschwindigkeit aus der im Speicher abgelegten ermittelten Optimalgeschwindigkeit und der erfassten Fahrgeschwindigkeit wenigstens anhand einer Mittelwertbildung oder einer Quantil-Bildung ermittelt.

In einer weiteren Ausführungsform der Erfindung ist im Speicher der Datenverarbeitungseinrichtung eine topografische Karte abgelegt, in der wenigstens ein Fahrhindernis abgelegt ist. Ferner ist dem Fahrhindernis in der topografischen Karte eine Position zugeordnet. Zur Ermittlung eines möglichen, der Position des Fahrzeugs zugeordneten, Fahrhindernisses vergleicht die Ermittlungseinrichtung die erfasste Position des Fahrzeugs mit der topografischen Karte.

In einer weiteren Ausführungsform der Erfindung umfasst das Fahrhindernis wenigstens eine der folgenden Situationen: eine Kurvensituation, eine Baustellensituation, eine Geschwindigkeitsbegrenzung, einen Gefahrenpunkt insbesondere eine glatte oder nicht einsehbare Straßenstelle. Besonders vorteilhaft ist hierbei, wenn bei Erfassen eines Fahrhindernisses, die Ermittlungseinrichtung die im Speicher zu der Position abgelegte ermittelte Optimalgeschwindigkeit mit der korrespondierend zu der erfassten Position neu ermittelten Optimalgeschwindigkeit ersetzt. Auf diese Weise kann die Optimalgeschwindigkeit schnell an eine sich verändernde Fahrsituation bei einem Fahrhindernis angepasst werden.

Von besonderem Vorteil ist, wenn die Ermittlungseinrichtung ausgelegt ist, eine mittels der Erfassungseinrichtung ermittelte zulässige Höchstgeschwindigkeit in dem Streckenabschnitt die ermittelte und/oder die neuermittelte Optimalgeschwindigkeit mit der ermittelten zulässigen Höchstgeschwindigkeit zu vergleichen und bei einem Abweichen der ermittelten zulässigen Höchstgeschwindigkeit um einen vordefinierten Schwellenwert von der ermittelten und/oder der neu ermittelten Optimalgeschwindigkeit die ermittelte zulässige Höchstgeschwindigkeit als fehlerbehaftet zu markieren.

Nachfolgend wird die Erfindung anhand von Figuren näher erläutert. Dabei zeigen:
Fig. 1 eine schematische Darstellung einer Datenverarbeitungseinrichtung,
Fig. 2 eine schematische Darstellung einer Fahrsituation mit mehreren Fahrzeugen und einem Fahrhindernis,
Fig. 3 ein Diagramm mit einem Geschwindigkeitsverlauf aufgetragen über der Zeit der in Fig. 2 gezeigten Fahrzeuge,
Fig. 4 ein Diagramm mit einem Signalverlauf eines Sensors aufgetragen über der Zeit,
Fig. 5 eine schematische Darstellung eines Ergebnisses der Datenverarbeitungseinrichtung in Form einer ermittelten Optimalgeschwindigkeit an einer örtlich definierten Position eines Straßennetzwerks, und
Fig. 6 eine schematische Darstellung einzelner Verfahrensschritte eines Verfahrens für die in Fig. 1 gezeigte Datenverarbeitungseinrichtung.

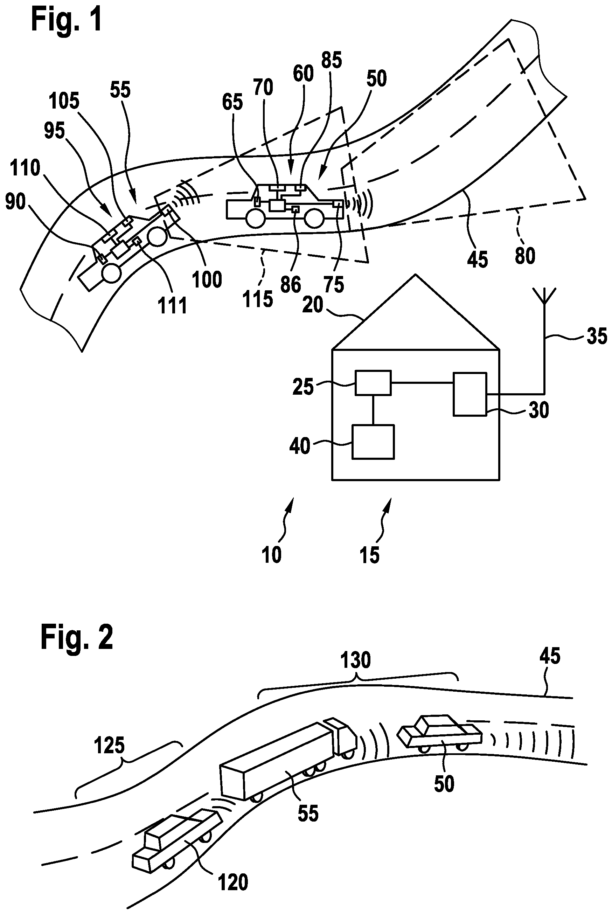

Fig. 1 zeigt eine schematische Darstellung einer Datenverarbeitungseinrichtung 10 mit einem Zentralrechner 15, der ortsgebunden, beispielsweise in einem Gebäude 20, angeordnet ist. Der Zentralrechner 15 umfasst eine Ermittlungseinrichtung 25 und eine mit der Ermittlungseinrichtung 25 verbundene Empfangseinrichtung 30. Die Empfangseinrichtung 30 ist ferner mit einer Antenne 35 verbunden. Ferner umfasst der Zentralrechner 15 einen Speicher 40, der mit der Ermittlungseinrichtung 25 verbunden ist.

Auf einer Straße 45 befinden sich ein erstes Fahrzeug 50 und ein hinter dem ersten Fahrzeug 50 fahrendes zweites Fahrzeug 55. Die Fahrzeuge 50, 55 folgen dabei dem Straßenverlauf der Straße 45. Das erste Fahrzeug 50 umfasst eine erste Erfassungseinrichtung 60 mit einer ersten Sendeeinrichtung 65, die miteinander verbunden sind. Die erste Erfassungseinrichtung 60 umfasst dabei ein erstes Positionsbestimmungssystem, das in der Ausführungsform als GPS-System ausgebildet ist. Ferner umfasst die erste Erfassungseinrichtung 60 ein erstes Radarsystem 75, das ausgelegt ist, einen ersten vor dem ersten Fahrzeug 50 liegenden Streckenabschnitt 80 dahingehend zu überwachen, ob in dem ersten Streckenabschnitt 80 ein weiteres vor dem ersten Fahrzeug 50 befindliches Fahrzeug fährt. In dem ersten Streckenabschnitt 80 ist in Fig. 1 kein weiteres Fahrzeug angeordnet, sodass der Streckenabschnitt 80 hierbei eine freie Fahrt für das erste Fahrzeug 50 auf der Straße 45 symbolisiert. Ferner ist im ersten Fahrzeug 50 ein erstes Videosystem 85 in einem oberen Bereich des ersten Fahrzeugs 50 angeordnet, um den ersten Streckenabschnitt 80 optisch zu erfassen und auf vorausfahrende Fahrzeuge vor dem ersten Fahrzeug 50 zu überwachen. Zusätzlich können mit dem ersten Videosystem 85 des ersten Fahrzeugs 50 ferner auch Straßenschilder oder Personen am Straßenrand erfasst und erkannt werden. Sowohl das erste Positionsbestimmungssystem 70, das erste Radarsystem 75 als auch das erste Kamerasystem 85 sind mit der ersten Sendeeinrichtung 65 verbunden.

In dem hinter dem ersten Fahrzeug 50 fahrenden zweiten Fahrzeug 55 ist, ebenso wie in dem ersten Fahrzeug 50, eine zweite Sendeeinrichtung 90 und ein zweites Erfassungssystem 95 vorgesehen. Die zweite Erfassungseinrichtung 95 umfasst dabei, ebenso wie die erste Erfassungseinrichtung 60, ein zweites Radarsystem 100, ein zweites Kamerasystem 105, sowie ein zweites Positionsbestimmungssystem 110. Sowohl das zweite Kamerasystem 105 als auch das zweite Radarsystem 100 sind ausgelegt, einen zweiten vor dem zweiten Fahrzeug 55 liegenden Streckenabschnitt 115 dahingehend zu überwachen, ob in dem zweiten Streckenabschnitt 115 ein Fahrzeug sich befindet. Wie in der Fig. 1 deutlich zu erkennen, sind das erste Fahrzeug 50 und das zweite Fahrzeug 55 derart zueinander beabstandet, dass das erste Fahrzeug 50 vollständig in dem zweiten voraus liegenden Streckenabschnitt 115 des zweiten Fahrzeugs 55 liegt, sodass das zweite Fahrzeug 55 auf das erste Fahrzeug 50 auffährt und keine freie Fahrt hat.

In der Ausführungsform sind die Radarsysteme 75, 100 der beiden Fahrzeuge 50, 55 als Teil eines Adaptive Cruise Control Systems (ACC-Systems) ausgebildet, das eine Information über eine Anwesenheit, einen Abstand und eine Geschwindigkeit zum vorausfahrenden Fahrzeug 50, 55 ermittelt. Alternativ ist auch denkbar, dass ein Radarsystem bzw. die Radarsensorik (oder eine weitere Sensorik zur Erfassung von Objekten) eines anderen Fahrerassistenzsystems zur Erfassung, ob sich ein Fahrzeug im vorausliegenden Streckenabschnitt 80 115 befindet, eingesetzt wird.
Das jeweils in den Fahrzeugen 50, 55 zusätzlich vorgesehene Kamerasystem 85, 105 erfasst optisch mittels eines Kamerasensors, ob sich im vorausliegenden Streckenabschnitt 80, 115 ein Fahrzeug 50, 55 befindet. Zusätzlich kann das Kamerasystem Straßenverkehrszeichen und/oder Personen auf oder am Straßenrand der Straße 45 erfassen. Ferner ist in dem ersten Fahrzeug 50 ein erstes Geschwindigkeitsmesssystem 86 vorgesehen, das eine Fahrgeschwindigkeit des ersten Fahrzeugs 50 erfasst. In dem zweiten Fahrzeug 55 ist ferner ein Geschwindigkeitsmesssystem 111 zur Erfassung der Geschwindigkeit des zweiten Fahrzeugs 55 vorgesehen.

Das Radarsystem 75, 100, das Positionsbestimmungssystem 70, 110, das Kamerasystem 85, 105 und das Geschwindigkeitserfassungssystem 86, 111 stellen die erfassten Informationen jeweils der entsprechenden mit der Erfassungseinrichtung 60, 95 verbundenen Sendeeinrichtung 65, 90 bereit. Die Sendeeinrichtung 65, 90 ist dabei ausgelegt, die Informationen mittels einer Drahtlosverbindung, beispielsweise nach dem GPRS-Standard zu versenden. Die von den Sendeeinrichtungen 65, 90 ausgesendeten Signale werden mittels der Antenne 35 empfangen. Die Empfangseinrichtung 30 stellt die empfangenen Informationen der Ermittlungseinrichtung 25 bereit.

In der Ausführungsform ist der Zentralrechner 15 ortsfest angeordnet. Alternativ ist auch denkbar, dass der Zentralrechner 15 durch eine Vielzahl von Einzelrechnern ausgebildet ist, die beispielsweise in jedem Fahrzeug 50, 55 vorgesehen sind, um dezentral die im Folgenden beschriebenen Verfahren des Zentralrechners 15 auszuführen. Auch wird darauf hingewiesen, dass die Sendeeinrichtung 65, 90 und/oder die Empfangseinrichtung 30 auch als Schnittstellen ausgebildet sein können, die beispielsweise die ermittelten Informationen untereinander zwischen den Fahrzeugen 50, 55, 120 und/oder dem Zentralrechner 15 bzw. Einzelrechner austauschen zu können.

Fig. 2 zeigt eine schematische Darstellung eines Fahrhindernisses auf der in Fig. 1 gezeigten Straße 45. Zusätzlich zu den in Fig. 1 gezeigten Fahrzeugen 50, 55 ist ein weiteres Fahrzeug 120 gezeigt, das hinter dem ersten und dem zweiten Fahrzeug 50, 55 hinterherfährt. Die in Fig. 2 gezeigte Straße 45 weist einen ersten Straßenabschnitt 125 und einen zweiten Straßenabschnitt 130 auf, wobei der erste Straßenabschnitt 125 einer Linkskurve und der zweite Straßenabschnitt 130 einer Rechtskurve entspricht. Da die Linkskurve als auch die Rechtskurve mit reduzierter Fahrgeschwindigkeit durch die Fahrzeuge 50, 55, 120 durchfahren werden, bilden diese jeweils ein Fahrhindernis aus. Das dritte Fahrzeug 120 ist hinsichtlich der Erfassungseinrichtung und der Sendeeinrichtung identisch ausgebildet. In Fig. 2 fahren die Fahrzeuge 50, 55, 120 in einer Kolonne hintereinander, wobei vor dem ersten Fahrzeug 50 sich kein weiteres Fahrzeug in Fahrtrichtung befindet und somit das erste Fahrzeug 50 eine freie Fahrt auf der Straße 45 hat. Dabei wird in der Ausführungsform unter einer freien Fahrt eine Fahrsituation verstanden, bei der das Fahrzeug 50, 55, 120 derartig zu einem voraus fahrenden Fahrzeug oder Hindernis beabstandet ist, dass ein Adaptive Cruise Control System (ACC-System) keinen Fahreingriff vornehmen würde, um die Geschwindigkeit des hinter dem ersten Fahrzeug herfahrenden zweiten bzw. hinter dem zweiten Fahrzeug 55 herfahrenden dritten Fahrzeug 120 zu reduzieren, um einen nötigen Mindestabstand zwischen den Fahrzeugen 50, 55, 120 einzuhalten bzw. um ein direktes Auffahren des zweiten bzw. dritten Fahrzeugs auf dem jeweiligen vorhergehenden Fahrzeug 50, 55 zu unterbinden. Alternativ ist auch denkbar, dass unter einer freien Fahrt beispielsweise ein vorbestimmter Streckenabschnitt 80, 115 verstanden wird, der frei von einem vorausfahrenden Fahrzeug ist, insbesondere ein geschwindigkeitsabhängiger Mindestabstand, der der Hälfte der Fahrgeschwindigkeit des Fahrzeugs 50, 55, 120 entspricht. Es sind jedoch auch andere Werte zur Festlegung eines Abstands zwischen den Fahrzeugen 50, 55, 120 zur Festlegung einer freien Fahrt für das jeweilige Fahrzeug 50, 55, 120 denkbar. Als besonders vorteilhaft hat es sich zur Festlegung einer freien Fahrt erwiesen, wenn der Mindestabstand dem Nominalwert der Fahrgeschwindigkeit entspricht. Auch wäre denkbar, unter einer freien Fahrt eine Information der Erfassungseinrichtung 60, 95 zu verstehen, die beinhaltet, dass kein Fahrzeug sich vor dem jeweiligen Fahrzeug 50, 55, 120, sowie bei dem ersten Fahrzeug 50 in den Figuren 1 und 2 befindet.

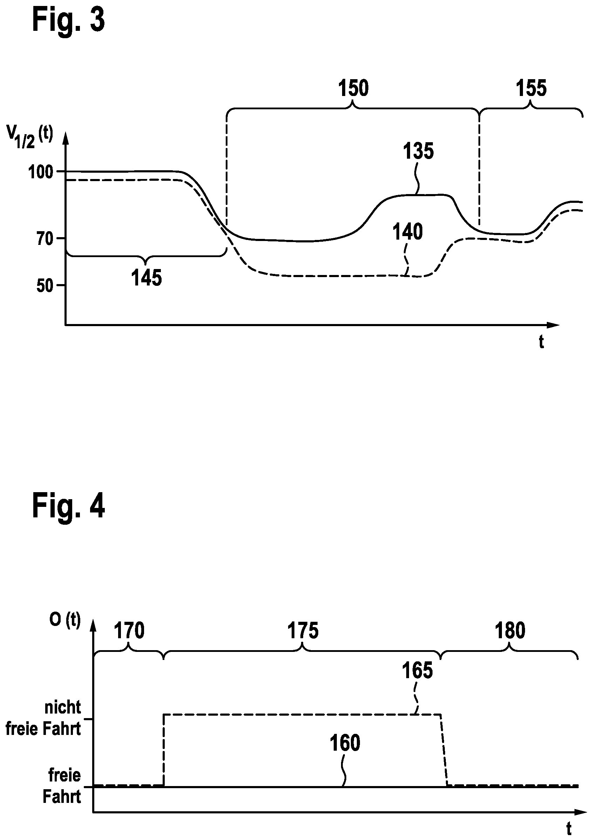

Fig. 3 zeigt eine schematische Darstellung eines Geschwindigkeitsprofils der in Fig. 1 und 2 gezeigten Fahrzeuge 50, 55, 120. Dabei ist eine Fahrgeschwindigkeit v aufgetragen über der Zeit t. Dabei zeigt ein erster Geschwindigkeitsverlauf 135 die Fahrgeschwindigkeit v₁ des ersten Fahrzeugs 50 entlang der Straße 45. Ein zweiter Geschwindigkeitsverlauf (in Fig. 3 strichliert dargestellt) zeigt die Fahrgeschwindigkeit v₂ des zweiten Fahrzeugs 55 bzw. des dritten Fahrzeugs 120 bei der Fahrt entlang der Straße 45. Dabei weist das erste Fahrzeug 50 gegenüber der Fahrgeschwindigkeit der zweiten Fahrzeuge 50, 120 eine durchweg höhere Gefahrgeschwindigkeit auf. Es wird darauf hingewiesen, dass der Geschwindigkeitsverlauf 135, 140 der Fahrzeuge 50, 55, 120 beispielhaft ist und durch viele Randbedingungen geprägt wird. So wird der in Fig. 3 gezeigte Geschwindigkeitsverlauf 135 des ersten Fahrzeugs 50 durch die beiden Straßenabschnitte 125, 130 mit den jeweiligen Kurvensituationen 125, 130 geprägt. Dabei umfasst der Geschwindigkeitsverlauf 135, 140 einen ersten Abschnitt 145, in dem der erste Geschwindigkeitsverlauf 135 dem zweiten Geschwindigkeitsverlauf 140 entspricht. In einem zweiten Abschnitt 150 weist der erste Geschwindigkeitsverlauf 135 des ersten Fahrzeugs 50 eine durchweg höhere Geschwindigkeit v₁ auf als die des hinter dem ersten Fahrzeug 50 fahrenden zweiten Fahrzeugs 55 ist. Zeitlich anschließend an den zweiten Abschnitt 150 schließt sich ein dritter Abschnitt 155 an, in dem der erste Geschwindigkeitsverlauf 135 zu dem zweiten Geschwindigkeitsverlauf 140 wiederum wie im ersten Abschnitt 140 identisch ist. Die Unterschiede im Geschwindigkeitsverlauf 135, 140 im zweiten Abschnitt 150 zwischen dem ersten Fahrzeug 50 und dem zweiten Fahrzeug 55 resultieren daraus, dass das erste Fahrzeug 50 eine freie Fahrt gegenüber dem zweiten Fahrzeug 55 hat. Dies hat zur Folge, dass das erste Fahrzeug 50 am Kurvenausgang schneller beschleunigen kann als das zweite Fahrzeug 55. Ferner wirken sich Bremsvorgänge des ersten Fahrzeugs 50 in einem verstärkten Bremsvorgang beim zweiten bzw. beim weiter nachfolgenden dritten Fahrzeug 120 aus, sodass bei einem Bremsvorgang, eingeleitet durch das erste Fahrzeug 50, das zweite Fahrzeug 55 auf eine niedrigere Geschwindigkeit v₂ herunterbremst als das erste Fahrzeug 50. Dies ist besonders deutlich im linksseitigen zeitlich früheren Bereich des zweiten Abschnitts 150.

Fig. 4 zeigt ein Diagramm eines Signalverlaufs O aufgetragen über der Zeit t. Dabei ist in dem Diagramm ein erster Signalverlauf 160 der ersten Erfassungseinrichtung 60 des ersten Fahrzeugs 50 mit einer durchgezogenen Linie gezeigt. Mit einer strichlierten Linie ist in Fig. 4 der zweite Signalverlauf 165 dargestellt. Der zweite Signalverlauf 165 ist in Fig. 4 strichliert aufgezeigt. Der zweite Signalverlauf 165 entspricht dabei dem Signalverlauf 165 des zweiten Fahrzeugs 55 bzw. des dritten Fahrzeugs 120. Dabei zeigt der erste Signalverlauf 160, dass das erste Fahrzeug 50 fortwährend eine freie Fahrt aufweist. Der zweite Signalverlauf 165 weist zwei Niveaus auf. Dabei werden im Folgenden die auf die Signalverläufe bezogene Abschnitte 170, 175, 180 in Hinblick auf die bereits in den Figur 3 genannten Abschnitte 145, 150, 155 fortlaufend weiter nummeriert. Zu Beginn der Zeitaufzeichnung weist auch der zweite Signalverlauf 165 in einem Abschnitt 170 eine freie Fahrt auf. In einem fünften Abschnitt 175, der zeitlich auf den vierten Abschnitt 170 folgt, ist das zweite Fahrzeug 55 so nah auf das erste Fahrzeug 50 aufgefahren, dass die zweite Erfassungseinrichtung 95 ein Signal über eine nicht freie Fahrt bzw. ein Fahrzeug 50 vor dem zweiten Fahrzeug 55 liefert. Dies wird in Fig. 4 mit einem erhöhten Niveau gegenüber dem im vierten Abschnitt 170 aufgezeigten Niveau symbolisiert. In einem sechsten Abschnitt 180, der zeitlich auf den fünften Abschnitt 175 folgt, wurde der Abstand zwischen dem zweiten Fahrzeug 55 und dem ersten Fahrzeug 50 so weit vergrößert, dass die zweite Erfassungseinrichtung 95 wieder, wie im vierten Abschnitt 170, ein Signal korrespondierend mit der Information über eine freie Fahrt des zweiten Fahrzeugs 55 liefert. Dabei wird darauf hingewiesen, dass der erste bis dritte Abschnitt 145, 150, 155 im zeitlichen Verlauf bzw. in der Dauer nicht dem vierten bis sechsten Abschnitt 170, 175, 180 entsprechen. Selbstverständlich ist auch denkbar, dass die Dauer und die zeitliche Abfolge des ersten bis dritten Abschnitts 145, 150, 155 dem vierten bis sechsten Abschnitt 170, 175, 180 entspricht.

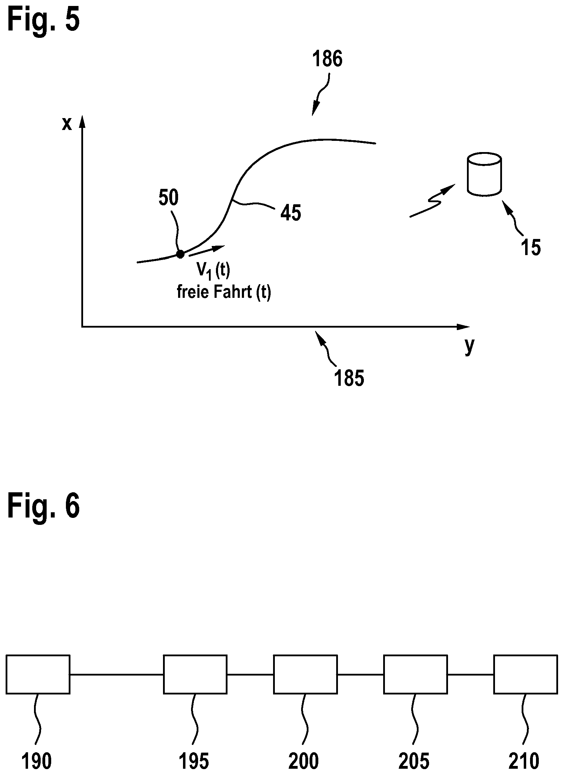

Fig. 5 zeigt eine schematische Darstellung eines Ergebnisses der Datenverarbeitungseinrichtung 10 in Form einer ermittelten Optimalgeschwindigkeit an einer örtlich definierten Position eines Straßennetzwerks 186, das in einer topografischen Karte 185 angelegt ist. Die topographische Karte 185 umfasst eine Vielzahl von Straßen 45 des Straßennetzwerks 186, wobei auf eine Darstellung aus Gründen der Übersichtlichkeit verzichtet wird. Die topografische Karte 185 ist in der Ausführungsform der Datenverarbeitungseinrichtung 10 in dem Speicher 40 des Zentralrechners 15 abgelegt. Ferner ist in der topografischen Karte 185 die Position des ersten Fahrzeugs 50 eingetragen. Ferner ist in Vektordarstellung die durch das erste Geschwindigkeitserfassungssystem 86 ermittelte Fahrgeschwindigkeit v₁(t) eingetragen. Wie bereits oben in Fig. 1 erläutert, ist die erste Erfassungseinrichtung 60 ausgelegt, sowohl die Fahrgeschwindigkeit v₁(t) als auch die Position des ersten Fahrzeugs 50 und den voraus liegenden ersten Streckenabschnitt 80 bezüglich weiterer Fahrzeuge zu überwachen und eine Information darüber der ersten Sendeeinrichtung 65 bereitzustellen. Die erste Sendeeinrichtung 65 überträgt die Information über den voraus liegenden ersten Streckenabschnitt 80, eine Information über die Position des ersten Fahrzeugs 50 und eine zusätzliche Information über die zu der Position korrespondierende Fahrgeschwindigkeit v₁(t) des ersten Fahrzeugs 50 an den Zentralrechner 15. Die Übertragung der Fahrgeschwindigkeit v_{1/2}(t) hat den Vorteil einer schnelleren und genaueren Erfassung einer Geschwindigkeitsänderung und hat ferner eine Entlastung des Zentralrechners 15 in seiner Rechenkapazität zur Folge. Die Übertragung der Fahrgeschwindigkeit ist jedoch nicht zwingend, sie kann auch durch den Zentralrechner 15 anhand der übertragenen Positionen erfolgen.

Fig. 6 zeigt einzelne Schritte des im Folgenden detailliert beschriebenen Verfahrens. In einem ersten Verfahrensschritt 190 werden Bewegungsprofile der Fahrzeuge 50, 55, 120 erfasst, indem die Informationen (Position des Fahrzeugs, Fahrgeschwindigkeit, freie oder nicht freie Fahrt) der Fahrzeuge 50, 55, 120 durch die Sendeeinrichtungen 65, 90 bzw. Empfangseinrichtung 30 des Zentralrechners 15 erfasst werden. Um die übermittelten Informationen dauerhaft verarbeiten zu können, werden die Informationen in dem Speicher 40 durch die Ermittlungseinrichtung 25 abgelegt. Die Ablage erfolgt dabei derartig, dass zu jeder Position eines Fahrzeugs 50, 55, 120 eine korrespondierende Fahrgeschwindigkeit und die Information über die freie Fahrt des jeweiligen Fahrzeugs abgelegt werden, sodass diese Informationen miteinander verknüpft sind.

In einem zweiten Verfahrensschritt 195 wird durch die Ermittlungseinrichtung 25 ermittelt, ob an der ermittelten Position des Fahrzeugs 50, 55, 120 ein Fahrhindernis in der topographischen Karte 185 zugeordnet ist. Dabei vergleicht die Ermittlungseinrichtung 25 die Position des Fahrzeugs 50, 55, 120 mit der im Speicher abgelegten topografischen Karte 185. Dabei ist in der topografischen Karte 185 jedem Fahrhindernis eine Position zugeordnet ist. Stimmen die Position des Fahrhindernisses und die erfasste Position des Fahrzeugs 50, 55, 120 im Wesentlichen überein, so befindet sich das Fahrzeug 50, 55, 120 an einem Fahrhindernis.

Ist der erfassten Position in der topographischen Karte 185 keinem Fahrhindernis zugeordnet, so ist die Ermittlungseinrichtung 25 ausgelegt, das erfasste Fahrhindernis in der topographischen Karte 185 zu der erfassten Position neu abzulegen und somit die erfasste Position mit dem neuerfassten Fahrhindernis zu verknüpfen. Dies hat insbesondere den Vorteil, dass bisher die topographische Karte 185 durch bisher nicht erfasste Fahrhindernisse ergänzt wird und so die topographische Karte weiter automatisch ausdetailliert werden kann. Dabei kann das Fahrhindernis, beispielsweise durch die Erfassungseinrichtung 60, 95 mittels des Radarsystems 75, 100 und/oder Kamerasystems 85, 105, durch das jeweilige Fahrzeug 50, 55, 120 erfasst werden. Selbstverständlich können Fahrhindernisse auch durch andersartig aufgebaute Erfassungseinrichtung 60, 95 ermittelt werden Als Fahrhindernis werden folgende Situationen verstanden: eine Kurvensituation, eine Baustellensituation, eine Geschwindigkeitsbegrenzung, ein Gefahrenpunkt.

In einem dritten Verfahrensschritt 200 berücksichtigt die Ermittlungseinrichtung 25 ausschließlich zur späteren Bildung der zuermitteltenden Optimalgeschwindigkeit nur diejenigen Fahrgeschwindigkeiten, die einer Position zugeordnet sind, die in der topografischen Karte 185 mit einem Fahrhindernis verknüpft sind. Auf diese Weise werden beispielsweise Geradeausfahrten auf einer Bundesautobahn nicht berücksichtigt, sodass hohe oder sehr niedrige Fahrgeschwindigkeiten auf der Bundesautobahn bei der Ermittlung der Optimalgeschwindigkeit unberücksichtigt bleiben.

In einem vierten Verfahrensschritt 205 werden die erfassten Informationen weiter für die spätere Ermittlung der Optimalgeschwindigkeit gefiltert. Dabei berücksichtigt die Ermittlungseinrichtung 25 jedoch bei der Bestimmung der zu ermitteltenden Optimalgeschwindigkeit nur diejenigen Fahrgeschwindigkeiten v_{1/2}(t) der Fahrzeuge 50, 55, 120, die mit der Information einer freien Fahrt für den voraus liegenden Streckenabschnitt 80, 115 verknüpft sind. Fahrgeschwindigkeiten v_{1/2}(t), die nicht mit einer freien Fahrt verknüpft sind, werden zur Ermittlung der neu ermittelten Optimalgeschwindigkeit durch die Ermittlungseinrichtung 25 nicht herangezogen und bleiben somit unberücksichtigt. Dies hat zur Folge, dass die neu ermittelte Optimalgeschwindigkeit nicht durch zu niedrige Fahrgeschwindigkeiten einer Kolonnenfahrt des zweiten und dritten Fahrzeugs 55, 120 verfälscht wird.

In einem fünften Verfahrensschritt 210 ermittelt die Ermittlungseinrichtung 25 für die jeweilige Position eine Optimalgeschwindigkeit. Dabei wird mit der Optimalgeschwindigkeit eine für die Fahrzeuginsassen angenehme Geschwindigkeit zu der jeweiligen Position verstanden, die zum einen hinreichend große Sicherheitsreserven für das Fahrzeug 50, 55, 120 beinhaltet und zum anderen ein zügiges Vorwärtskommen des Fahrzeugs 50, 55, 120 gewährleistet. Es wird insbesondere darauf hingewiesen, dass die Optimalgeschwindigkeit nicht mit einer an der Position möglichen Maximalgeschwindigkeit übereinstimmt. Vielmehr ist die Optimalgeschwindigkeit grundsätzlich kleiner als die Maximalgeschwindigkeit an der gleichen Position.

Ist im Speicher 40 der Datenverarbeitungseinrichtung 10 zu der erfassten Position bzw. dem erfassten Fahrhindernis keine Optimalgeschwindigkeit abgelegt, so verknüpft die Ermittlungseinrichtung 25 die ermittelte Fahrgeschwindigkeit mit der erfassten Position und dem ermittelten Fahrhindernis als neuermittelte Optimalgeschwindigkeit und legt diese mit den Verknüpfungen im Speicher 40 ab.

Ferner kann im Speicher 40 der Datenverarbeitungseinrichtung 10 zu der erfassten Position der Fahrzeuge 50, 55, 120 in der topografischen Karte 185 jeweils eine bereits ermittelte Optimalgeschwindigkeit abgelegt sein. Die bereits ermittelte Optimalgeschwindigkeit kann beispielsweise durch mathematische Methoden oder durch Messmethoden, insbesondere durch das im Folgende beschriebene Vorgehen ermittelt worden sein. Um die ermittelte Optimalgeschwindigkeit an eine tatsächliche im Folgenden als neu ermittelt bezeichnete Optimalgeschwindigkeit an einer Position anzupassen, die für die Fahrzeuginsassen als besonders komfortabel empfunden wird, ist die Ermittlungseinrichtung 25 ausgelegt, zu der erfassten Position eine entsprechend zugeordnete neuermittelte Optimalgeschwindigkeit anhand der erfassten Fahrgeschwindigkeit zu der erfassten Position bzw. dem erfassten Fahrhindernis zu ermitteln. Dazu verrechnet die Ermittlungseinrichtung 25 die im Speicher 40 abgelegte ermittelte Optimalgeschwindigkeit mit der erfassten Fahrgeschwindigkeit beispielsweise mittels einer Mittelwertbildung oder einer Quantil-Bildung zu der neu ermittelten Optimalgeschwindigkeit.

In der Ausführungsform wird somit zur Ermittlung der neu ermittelten Optimalgeschwindigkeit ausschließlich die Informationen über die Positionen und die Fahrgeschwindigkeiten des ersten Fahrzeugs 50 fortwährend verwendet, so dass durch das erste Fahrzeug 50 die neuermittelte Optimalgeschwindigkeit bestimmt wird (falls bisher keine ermittelte Optimalgeschwindigkeit in der topographischen Karte 185 hinterlegt war) oder die bisher in der topographischen Karte 185 abgelegte ermittelte Optimalgeschwindigkeit verbessert wird. Die Fahrgeschwindigkeiten des zweiten Fahrzeugs 55 bzw. vierten Fahrzeugs 120 werden nur mit der zugeordneten Position im vierten Abschnitt 170 bzw. im sechsten Abschnitt 180 (vgl. Fig. 4) verwendet, da hierbei diese mit einer freien Fahrt verknüpft sind. Dies hat zur Folge, dass für das Fahrhindernis der Figur 1 beschriebenen Kurvensituation, die durch das erste Fahrzeug 50 durch die Ermittlungseinrichtung 25 neuermittelte Optimalgeschwindigkeit als im Speicher 40 bzw. in der topographischen Karte 185 abgelegte ermittelte Optimalgeschwindigkeit durch die Ermittlungseinrichtung 25 verwendet wird, um anhand der durch die durch das zweite Fahrzeug 55, bzw. dritte Fahrzeug 120 ermittelte Fahrgeschwindigkeit v₂(t) zu der jeweiligen Position die neuermittelte Optimalgeschwindigkeit zu bestimmen, wobei nur die Fahrgeschwindigkeiten berücksichtigt werden, die mit der freien Fahrt zu der jeweiligen Position verknüpft sind. Dies hat weiter zur Folge, dass die neuermittelte Optimalgeschwindigkeit selektiv weiter durch das zweite bzw. dritte Fahrzeug 55, 120 verbessert wird.

Die einzelnen Verfahrensschritte 190, 195, 200, 205, 210 können in ihrer Reihenfolge geändert werden. So ist denkbar, dass beispielsweise die Filterung der Informationen, die einer freien Fahrt zugeordnet sind (oben in Verfahrensschritt 205), auch im ersten Verfahrensschritt 190 vorgenommen werden kann. Dabei wäre von Vorteil, dass beispielsweise nur diejenigen Informationen über die Fahrgeschwindigkeit zu einer bestimmten Position über die Sendeeinrichtung 60, 90 übertragen werden, die mit einer freien Fahrt verknüpft sind. Dies reduziert das zu übertragende Datenvolumen beträchtlich und sorgt somit für die Möglichkeit, mittels eines einfachen Datennetzes zahlreiche Informationen von den Fahrzeugen 50, 55, 120 zu dem Zentralrechner 15 zu übertragen. Auch können beispielsweise dadurch die Kosten für die Übertragung, beispielsweise in einem Mobilfunknetz an einen Server reduziert werden. Ferner wird der Rechenaufwand der Ermittlungseinrichtung 25 des Zentralrechners 15 in den darauf folgenden Schritten reduziert.

Alternativ zu den oben ausgeführten Ausführungsformen wird darauf hingewiesen, dass alternativ zu dem oben beschriebenen Radarsystem 75, 100 auch das Kamerasystem 85, 105 verwendet werden kann. Ferner bieten sich auch alternativ hierzu ein Lidarsystem oder ein Laserabstandsmesssystem an.

Des Weiteren kann vorgesehen sein, dass Informationen des Kamerasystems 85, 105 über die Sendeeinrichtung 65, 90 an den Zentralrechner 15 übertragen werden. Ferner kann die Ermittlungseinrichtung 25 ausgelegt sein, mittels der neu ermittelten Optimalgeschwindigkeit für eine Position die Informationen des Kamerasystems 85, 105, insbesondere die mittels des Kamerasystems 85, 105 ermittelte zulässige Höchstgeschwindigkeit, zu verifizieren. Dazu vergleicht die Ermittlungseinrichtung 25 die für die Position neu ermittelte Optimalgeschwindigkeit mit der über das Kamerasystem 85, 105 ermittelten zulässigen Höchstgeschwindigkeit, wobei die Ermittlungseinrichtung 25 ausgelegt ist, bei einem Abweichen der über das Kamerasystem 85, 105 erfassten zulässigen Höchstgeschwindigkeit von der neu ermittelten Optimalgeschwindigkeit um einen vordefinierten Schwellenwert die von dem Kamerasystem 85, 105 erfasste zulässige Höchstgeschwindigkeit als fehlerbehaftet zu zu markieren.

Alternativ zu der oben beschriebenen Kurvensituation ist auch denkbar, die oben beschriebenen Verfahrensschritte bei einer Baustellensituation, bei einer Geschwindigkeitsbegrenzungssituation oder einem sonstigen Gefahrenpunkt anzuwenden. Insbesondere kann hierdurch frühzeitig, beispielsweise beim Einrichten einer Baustelle, bereits die ermittelte Optimalgeschwindigkeit für den Baustellenbereich adaptiert werden und so der Fahrzeugführer frühzeitig auf das Hindernis hingewiesen werden.

Auch wird darauf hingewiesen, dass die Sendeeinrichtung 65, 90 und/oder die Empfangseinrichtung 30 auch als Schnittstellen ausgebildet sein können.

## Patentansprüche

1. Datenverarbeitungseinrichtung (10) mit einer Empfangseinrichtung (30) und einer Ermittlungseinrichtung (25), wobei die Empfangseinrichtung (30) mit der Ermittlungseinrichtung (25) gekoppelt ist, - wobei für wenigstens ein Fahrzeug (50, 55, 120) eine Erfassungseinrichtung (60, 95) und eine mit der Erfassungseinrichtung (60, 95) verbundene Sendeeinrichtung (65, 90) vorgesehen ist,
- wobei die Erfassungseinrichtung (60, 95) ausgelegt ist, Positionen des Fahrzeugs (50, 55, 120) zu erfassen, zu bestimmen, ob der der jeweilis erfassten Position vorausliegende Streckenabschnitt (80, 115) frei von einem vorausfahrenden Fahrzeug (50, 55, 120) ist und der Sendeeinrichtung (65, 90) die Information über die jeweils erfasste Position und den der jeweils erfassten Position zugeordneten Streckenabschnitt (80, 115) bereitzustellen,
- wobei die Sendeeinrichtung (65, 90) ausgelegt ist, die von der Erfassungseinrichtung (60, 95) bereitgestellte Information über die jeweils erfasste Position und den der jeweils erfassten Position zugeordneten Streckenabschnitt (80, 115) an die Empfangseinrichtung (30) zu senden, wobei die Empfangseinrichtung (30) ausgelegt ist, die Information über die jeweils erfasste Position des wenigstens eines Fahrzeugs (50, 55, 120) und die zu der jeweils erfassten Position zugeordnete Information über den vor dem Fahrzeug (50, 55, 120) vorausliegenden Streckenabschnitt (80, 115) bezüglich einer freien Fahrt des Fahrzeugs (50, 55, 120) zu empfangen,
- wobei die Ermittlungseinrichtung (25) ausgelegt ist, eine der jeweils erfassten Position zugeordnete zu ermittelnde Optimalgeschwindigkeit anhand einer zu der jeweils erfassten Position zugeordnete erfasste Fahrgeschwindigkeit (v_{1/2}) des Fahrzeugs (50, 55, 120) zu bestimmen,
- wobei die Ermittlungseinrichtung (25) ausgelegt ist, zur Bestimmung der Optimalgeschwindigkeit zu der jeweils erfassten Position ausschließlich diejenige Fahrgeschwindigkeit des Fahrzeugs (50, 55, 120) zu berücksichtigen, die mit der Information einer freien Fahrt für den der jeweils erfassten Position vorausliegenden Streckenabschnitt (80, 115) verknüpft ist.

2. Datenverarbeitungseinrichtung (10) nach Anspruch 1, **dadurch gekennzeichnet, dass** die Erfassungseinrichtung (65, 90) ein Positionsbestimmungssystem (70, 110), insbesondere ein GPS-System, und wenigstens eines der folgenden Systeme umfasst: ein Radarsystem (75, 100), ein Kamerasystem (85, 105), ein Lidarsystem, ein Laserabstandsmesssystem.

3. Datenverarbeitungseinrichtung (10) nach Anspruch 1 oder 2, **gekennzeichnet durch** einen Speicher, der mit der Ermittlungseinrichtung (25) verbunden ist, wobei in dem Speicher (40) zu einer jeweils erfassten Position eine bereits ermittelte Optimalgeschwindigkeit abgelegt ist.

4. Datenverarbeitungseinrichtung (10) nach Anspruch 3, **dadurch gekennzeichnet, dass** die Ermittlungseinrichtung (25) ausgelegt ist, aus der im Speicher (40) abgelegten ermittelten Optimalgeschwindigkeit und der ermittelten Fahrgeschwindigkeit eine neuermittelte Optimalgeschwindigkeit zu ermitteln.

5. Datenverarbeitungseinrichtung (10) nach Anspruch 4, **dadurch gekennzeichnet, dass** die Ermittlungseinrichtung (25) zur Ermittlung der neuermittelten Optimalgeschwindigkeit aus der im Speicher (40) abgelegten ermittelten Optimalgeschwindigkeit und der erfassten Fahrgeschwindigkeit wenigstens anhand einer Mittelwertbildung oder einer Quantil-Bildung ausgelegt ist.

6. Datenverarbeitungseinrichtung (10) nach einem der Ansprüche 3 bis 5, **dadurch gekennzeichnet, dass** im Speicher (40) eine topographische Karte (185) abgelegt ist, in der wenigstens ein Fahrhindernis (125, 130) abgelegt ist, wobei dem Fahrhindernis (125, 130) in der topographischen Karte (185) eine Position zugeordnet ist, wobei die Ermittlungseinrichtung (25) ausgelegt ist, die jeweils erfasste Position mit der topographischen Karte (185) zur Ermittlung eines möglichen der Position des Fahrzeugs (50, 55, 120) zugeordneten Fahrhindernisses zu vergleichen.

7. Datenverarbeitungseinrichtung (10) nach Anspruch 6, **dadurch gekennzeichnet, dass** das Fahrhindernis wenigstens eine der folgenden Situationen umfasst: eine Kurvensituation (125, 130), eine Baustellensituation, eine Geschwindigkeitsbegrenzung, einen Gefahrenpunkt.

8. Datenverarbeitungseinrichtung (10) nach Anspruch 6 oder 7, **dadurch gekennzeichnet, dass** die Ermittlungseinrichtung (25) ausgelegt ist, bei Erfassen eines Fahrhindernisses (125, 130), die im Speicher (40) zu der Position abgelegte ermittelte Optimalgeschwindigkeit mit der korrespondierend zu der jeweils erfassten Position neuermittelten Optimalgeschwindigkeit zu ersetzten.

9. Verfahren zur Ermittlung einer Optimalgeschwindigkeit an einer erfassten Position,
- wobei für wenigstens ein Fahrzeug (50, 55, 120) Positionen des Fahrzeugs (50, 55, 120) erfasst werden,
- wobei der der jeweils erfassten Position vorausliegende Streckenabschnitt (80, 115) auf ein Vorliegen einer freien Fahrt des Fahrzeugs (50, 55, 120) überwacht wird und die Information über die jeweils erfasste Position und den der jeweils erfassten Position zugeordneten Streckenabschnitt (80, 115) mittels einer Sendeeinrichtung (65, 90) and eine Empfangseinrichtung (30) gesendet wird,
- wobei mittels der Empfangseinrichtung (30) die Information über die jeweils erfasste Position des wenigstens eines Fahrzeugs (50, 55, 120) und die zu der jeweils erfassten Position zugeordnete Information über den dem Fahrzeug (50, 55, 120) vorausliegenden Streckenabschnitt (80, 115) bezüglich einer freien Fahrt des Fahrzeugs (50, 55, 120) empfangen wird,
- wobei mittels einer Ermittlungseinrichtung (25) der der jeweils erfassten Position zugeordnete zu ermittelnde Optimalgeschwindigkeit anhand einer zu der erfassten Position zugeordneten erfassten Fahrgeschwindigkeit (v_{1/2}) des Fahrzeugs (50, 55, 120) bestimmt wird,
- wobei zur Bestimmung der Optimalgeschwindigkeit zu der jeweils erfassten Position ausschließlich diejenige Fahrgeschwindigkeit des Fahrzeugs (50, 55, 120) berücksichtigt wird, die mit der Information einer freien Fahrt für den der jeweils erfassten Position vorausliegenden Streckenabschnitt (80, 115) verknüpft ist.

10. Computerprogrammprodukt mit Programmcodemitteln zur Durchführung des Verfahrens nach Anspruch 9, wenn das Computerprogrammprodukt auf einer Datenverarbeitungseinrichtung (10) abläuft oder auf einem computerlesbaren Datenträger gespeichert ist

## Claims

1. Data processing device (10) having a receiving device (30) and a determination device (25), the receiving device (30) being coupled to the determination device (25),
- a detection device (60, 95) and a transmitting device (65, 90) connected to the detection device (60, 95) being provided for at least one vehicle (50, 55, 120),
- the detection device (60, 95) being designed to detect positions of the vehicle (50, 55, 120), to determine whether the road section (80, 115) in front of the respectively detected position is free of a vehicle (50, 55, 120) driving in front, and to provide the transmitting device (65, 90) with the information relating to the respectively detected position and the road section (80, 115) assigned to the respectively detected position,
- the transmitting device (65, 90) being designed to transmit the information relating to the respectively detected position and the road section (80, 115) assigned to the respectively detected position, as provided by the detection device (60, 95), to the receiving device (30),
- the receiving device (30) being designed to receive the information relating to the respectively detected position of the at least one vehicle (50, 55, 120) and the information relating to the road section (80, 115) in front of the vehicle (50, 55, 120) with regard to a free journey of the vehicle (50, 55, 120), which is assigned to the respectively detected position,
- the determination device (25) being designed to determine an optimum speed which is to be determined and is assigned to the respectively detected position on the basis of a detected driving speed (v_{1/2}) of the vehicle (50, 55, 120) assigned to the respectively detected position,
- the determination device (25) being designed to take into account only that driving speed of the vehicle (50, 55, 120) which is linked to the information relating to a free journey for the road section (80, 115) in front of the respectively detected position in order to determine the optimum speed for the respectively detected position.

2. Data processing device (10) according to Claim 1, **characterized in that** the detection device (65, 90) comprises a position determination system (70, 110), in particular a GPS system, and comprises at least one of the following systems: a radar system (75, 100), a camera system (85, 105), a lidar system, a laser distance measuring system.

3. Data processing device (10) according to Claim 1 or 2, **characterized by** a memory which is connected to the determination device (25), the memory (40) storing an optimum speed which has already been determined for a respectively detected position.

4. Data processing device (10) according to Claim 3, **characterized in that** the determination device (25) is designed to determine a newly determined optimum speed from the determined optimum speed stored in the memory (40) and the determined driving speed.

5. Data processing device (10) according to Claim 4, **characterized in that** the determination device (25) is designed for determining the newly determined optimum speed from the determined optimum speed stored in the memory (40) and the detected driving speed at least by forming a mean value or a quantile.

6. Data processing device (10) according to one of Claims 3 to 5, **characterized in that** the memory (40) stores a topographical map (185) which stores at least one driving obstacle (125, 130), a position being assigned to the driving obstacle (125, 130) in the topographical map (185), the determination device (25) being designed to compare the respectively detected position with the topographical map (185) in order to determine a possible driving obstacle assigned to the position of the vehicle (50, 55, 120).

7. Data processing device (10) according to Claim 6, **characterized in that** the driving obstacle comprises at least one of the following situations: a bend situation (125, 130), a roadworks situation, a speed restriction, a danger spot.

8. Data processing device (10) according to Claim 6 or 7, **characterized in that** the determination device (25) is designed, if a driving obstacle (125, 130) is detected, to replace the determined optimum speed stored in the memory (40) for the position with the optimum speed newly determined in a manner corresponding to the respectively detected position.

9. Method for determining an optimum speed at a detected position,
- positions of at least one vehicle (50, 55, 120) being detected for the vehicle (50, 55, 120),
- the road section (80, 115) in front of the respectively detected position being monitored for the presence of a free journey of the vehicle (50, 55, 120) and the information relating to the respectively detected position and the road section (80, 115) assigned to the respectively detected position being transmitted to a receiving device (30) by means of a transmitting device (65, 90),
- the information relating to the respectively detected position of the at least one vehicle (50, 55, 120) and the information relating to the road section (80, 115) in front of the vehicle (50, 55, 120) with respect to a free journey of the vehicle (50, 55, 120), which is assigned to the respectively detected position, being received by means of the receiving device (30),
- the optimum speed which is to be determined and is assigned to the respectively detected position being determined on the basis of a detected driving speed (v_{1/2}) of the vehicle (50, 55, 120) assigned to the detected position by means of a determination device (25),
- only that driving speed of the vehicle (50, 55, 120) which is linked to the information relating to a free journey for the road section (80, 115) in front of the respectively detected position being taken into account in order to determine the optimum speed for the respectively detected position.

10. Computer program product having program code means for carrying out the method according to Claim 9 when the computer program product runs on a data processing device (10) or is stored on a computer-readable data storage medium.

## Revendications

1. Dispositif de traitement de données (10) comprenant un dispositif de réception (30) et un dispositif de détermination (25), le dispositif de réception (30) étant connecté au dispositif de détermination (25),
- un dispositif de détection (60, 95) et un dispositif d'émission (65, 90) relié avec le dispositif de détection (60, 95) étant prévu pour au moins un véhicule (50, 55, 120),
- le dispositif de détection (60, 95) étant conçu pour détecter des positions du véhicule (50, 55, 120) afin de définir si la portion de trajet (80, 115) qui se trouve à l'avant de la position détectée respective est libre d'un véhicule (50, 55, 120) qui précède et pour mettre à la disposition du dispositif d'émission (65, 90) les informations à propos de la position détectée respective et de la portion de trajet (80, 115) associée à la position détectée respective,
- le dispositif d'émission (65, 90) étant conçu pour envoyer au dispositif de réception (30) les informations mises à disposition par le dispositif de détection (60, 95) à propos de la position détectée respective et de la portion de trajet (80, 115) associée à la position détectée respective,
- le dispositif de réception (30) étant conçu pour recevoir les informations à propos de la position détectée respective de l'au moins un véhicule (50, 55, 120) et les informations associées à la position détectée respective à propos de la portion de trajet (80, 115) qui se trouve à l'avant du véhicule (50, 55, 120) concernant une circulation libre du véhicule (50, 55, 120),
- le dispositif de détermination (25) étant conçu pour définir une vitesse optimale à déterminer associée à la position détectée respective au moyen d'une vitesse de déplacement (v_{1/2}) détectée du véhicule (50, 55, 120) associée à la position détectée respective,
- le dispositif de détermination (25) étant conçu pour, en vue de la définition de la vitesse optimale pour la position détectée respective, tenir compte exclusivement de la vitesse de déplacement du véhicule (50, 55, 120) qui est liée aux informations d'une circulation libre du véhicule (50, 55, 120) pour la portion de trajet (80, 115) qui se trouve à l'avant de la position détectée respective.

2. Dispositif de traitement de données (10) selon la revendication 1, **caractérisé en ce que** le dispositif de détection (65, 90) comprend un système de définition de position (70, 110), notamment un système GPS, et au moins l'un des systèmes suivants : un système radar (75, 100), un système à caméra (85, 105), un système lidar, un système de télémétrie à laser.

3. Dispositif de traitement de données (10) selon la revendication 1 ou 2, **caractérisé par** une mémoire qui est reliée au dispositif de détermination (25), une vitesse optimale déterminée pour une position détectée respective étant déjà enregistrée dans la mémoire (40).

4. Dispositif de traitement de données (10) selon la revendication 3, **caractérisé en ce que** le dispositif de détermination (25) est conçu pour déterminer une vitesse optimale nouvellement déterminée à partir de la vitesse optimale déterminée enregistrée dans la mémoire (40) et de la vitesse de déplacement déterminée.

5. Dispositif de traitement de données (10) selon la revendication 4, **caractérisé en ce que** le dispositif de détermination (25) est conçu pour déterminer la vitesse optimale nouvellement déterminée à partir de la vitesse optimale déterminée enregistrée dans la mémoire (40) et de la vitesse de déplacement déterminée au moins au moyen à l'aide d'un calcul de moyenne ou d'un calcul de quantile.

6. Dispositif de traitement de données (10) selon l'une des revendications 3 à 5, **caractérisé en ce qu'**une carte topographique (185) est enregistrée dans la mémoire (40), dans laquelle est enregistré au moins un obstacle à la circulation (125, 130), une position dans la carte topographique (185) étant associée à l'obstacle à la circulation (125, 130), le dispositif de détermination (25) étant conçu pour comparer la position détectée respective avec la carte topographique (185) afin de déterminer un obstacle à la circulation possiblement associé à la position du véhicule (50, 55, 120).

7. Dispositif de traitement de données (10) selon la revendication 6, **caractérisé en ce que** l'obstacle à la circulation comprend au moins l'une des situations suivantes : une situation de virage (125, 130), une situation de chantier, une limitation de vitesse, un point de danger.

8. Dispositif de traitement de données (10) selon la revendication 6 ou 7, **caractérisé en ce que** le dispositif de détermination (25) est conçu pour, lors de la détection d'un obstacle à la circulation (125, 130), remplacer la vitesse optimale déterminée enregistrée dans la mémoire (40) pour la position par la vitesse optimale nouvellement déterminée correspondant à la position détectée respective.

9. Procédé de détermination d'une vitesse optimale à une position détectée,
- des positions d'au moins un véhicule (50, 55, 120) étant détectée pour le véhicule (50, 55, 120),
- la portion de trajet (80, 115) qui se trouve à l'avant de la position détectée respective étant surveillée en vue de la présence d'une possibilité de libre circulation du véhicule (50, 55, 120) et les informations à propos de la position détectée respective et de la portion de trajet (80, 115) associée à la position détectée respective étant envoyées à un dispositif de réception (30) au moyen d'un dispositif d'émission (65, 90),
- les informations mises à disposition à propos de la position détectée respective de l'au moins un véhicule (50, 55, 120) et les informations associées à la position détectée respective à propos de la portion de trajet (80, 115) qui se trouve à l'avant du véhicule (50, 55, 120) concernant une circulation libre du véhicule (50, 55, 120) étant reçues au moyen du dispositif de réception (30),
- la vitesse optimale à déterminer associée à la position détectée respective étant définie au moyen du dispositif de détermination (25) à l'aide d'une vitesse de déplacement (V_{1/2}) détectée du véhicule (50, 55, 120) associée à la position détectée respective,
- la vitesse de déplacement du véhicule (50, 55, 120) qui est prise en compte en vue de la définition de la vitesse optimale pour la position détectée respective étant exclusivement celle qui est liée aux informations d'une circulation libre pour la portion de trajet (80, 115) qui se trouve à l'avant de la position détectée respective.

10. Produit de programme informatique comprenant des moyens de code de programme pour mettre en oeuvre le procédé selon la revendication 9 lorsque le produit de programme informatique est exécuté sur un dispositif de traitement de données (10) ou est chargé sur un support lisible par ordinateur.
